Europäisches Patentamt

European Patent Office

Office européen des brevets

(19)

(11) Veröffentlichungsnummer: **0 361 228**
**A2**

(12) **EUROPÄISCHE PATENTANMELDUNG**

(21) Anmeldenummer: **89117095.3**

(22) Anmeldetag: **15.09.89**

(51) Int. Cl.5 **B60F 3/00**

(30) Priorität: **24.09.88 DE 3832559**

(43) Veröffentlichungstag der Anmeldung:
**04.04.90 Patentblatt 90/14**

(84) Benannte Vertragsstaaten:
**FR GB IT SE**

(71) Anmelder: **EISENWERKE KAISERSLAUTERN GÖPPNER GMBH**
**Barbarossastrasse 30**
**D-6750 Kaiserslautern(DE)**

(72) Erfinder: **Göppner, Ulrich W., Dipl.-Ing.**
**Barbarossastrasse 30**
**D-6750 Kaiserslautern/Pfalz(DE)**
Erfinder: **Eberl, Klaus**
**Flurstrasse 7**
**D-6799 St. Julian 3(DE)**

(74) Vertreter: **Patentanwälte Dipl.-Ing. F.W. Möll**
**Dipl.-Ing. H.Ch. Bitterich**
**Langstrasse 5 Postfach 2080**
**D-6740 Landau/Pfalz(DE)**

(54) **Amphibisches Kraftfahrzeug.**

㉧ Um mit amphibischen Kraftfahrzeugen die Wasserausfahrt mit vollem Schub des Wasserantriebs bewältigen zu können, ohne daß sich die Räder des Landantriebs in das Erdreich des Ufers eingraben, ist in den Antriebsstrang (1, 10, 12) des Landantriebs eine Kupplung (7) eingebaut, deren Abtriebsdrehzahl entsprechend der Differenz zwischen Soll- und Ist- drehzahl des Landantriebs geregelt modulierbar ist. Eine zusätzliche Abbremsung der Antriebsräder ist mittels Betriebsbremse oder Retarder (9) möglich.

Fig. 1

## Amphibisches Kraftfahrzeug

Die Erfindung betrifft ein amphibisches Kraftfahrzeug gemäß dem Oberbegriff des Anspruchs 1.

Amphibische Kraftfahrzeuge mit einem derartigen Antriebssystem sind in praktisch allen Armeen eingesetzt. Bei der Fahrt auf dem Land, bei der Fahrt vom Land ins Wasser und bei der Fahrt im Wasser verhalten sich diese Fahrzeuge meist problemlos. Probleme entstehen regelmäßig bei der Ausfahrt aus dem Wasser, insbesondere wenn das Ufer steil und oder matschig ist.

Schwierige Wasserausfahrten werden regelmäßig nur von besonders geübten Fahrzeuglenkern gemeistert. Der Grund liegt darin, daß der Wasserantrieb hohe Drehzahlen benötigt, um genügend Schub zu erzeugen, während gleichzeitig der Landantrieb eine der Landegeschwindigkeit entsprechende, möglichst geringe Drehzahl haben sollte, damit sich die Räder nicht in das Ufer eingraben.

Die üblichen Antriebssysteme dieser amphibischen Kraftfahrzeuge bieten wegen der mechanischen Kopplung zwischen Wasser- und Landantrieb keine ausreichenden Anpassungsmöglichkeiten. Dies gilt insbesondere für solche Fahrzeuge, die einen stufenlosen hydrodynamischen Drehzahl- und Drehmomenten-Wandler verwenden, zumal in diesen Fällen die Wandler bei höheren Drehzahlen mechanisch überbrückt werden.

Aber auch ohne eine solche mechanische Überbrückung stellt sich im Landantrieb keine ausreichende Drehzahlwandlung ein, da die Antriebsräder im Wasser zu wenig abgebremst werden und deshalb automatisch hohe Drehzahlen annehmen.

Die Fahrzeugführer müssen also im Augenblick des Anlandens die Motordrehzahl auf den richtigen Wert zurücknehmen, bis die Räder greifen, ohne durchzudrehen. Auch bei der anschließenden Wasserausfahrt selbst muß mit dementsprechend verminderter Motordrehzahl gefahren werden, so daß auch in dieser Phase die unterstützende Wirkung des Wasserantriebes fehlt.

Der vorliegenden Erfindung liegt die Aufgabe zugrunde, ein amphibisches Kraftfahrzeug mit verbesserter Antriebstechnik anzugeben, die es erlaubt, beim Anlanden und bei der Wasserausfahrt gleichzeitig einen hohen Schub des Wasserantriebs und eine gezielt niedrige Drehzahl des Landantriebs einzustellen.

Diese Aufgabe wird gelöst durch ein gattungsgemäßes amphibisches Kraftfahrzeug mit den kennzeichnenden Merkmalen des Anspruchs 1.

Damit ergeben sich die Vorteile, daß durch einfaches Verändern der Kupplungskraft die Abtriebsdrehzahl der Kupplung auch bei voller Motordrehzahl, die zur Erzeugung eines ausreichend hohen Schubs des Wasserantriebs erforderlich ist, sicher auf die geforderte geringe Drehzahl des Landantriebs reduziert werden kann, ohne daß Probleme mechanischer oder thermischer Art auftreten, da die Verlustleistung über das Wandler-Öl an den Ölkühler abgeführt wird. Außerdem ist diese Konstruction in bestehenden Fahrzeugen problemlos nachrüstbar.

Gemäß einer vorteilhaften Weiterbildung der Erfindung ist mit der Ansteuerung der Kupplung die Ansteuerung der Bremsen oder des Retarders des Landantriebs gekoppelt. Auf diese Weise können die Räder des Landantriebs schon im Wasser abgebremst werden, ohne daß der Fahrzeugführer tätig werden muß. Außerdem werden durch diese relativ einfache Maßnahme Regelschwingungen auch bei Verwendung einfacher Regelschaltungen sicher verhindert. Es versteht sich, daß die Bremswirkung so dosiert wird, daß die Wasserausfahrt selbst nicht behindert wird.

Gemäß einer Ausgestaltung der Erfindung ist die Kupplung eine Reibungskupplung. In diesem Fall findet in der Kupplung eine einfache Drehzahlwandlung statt. Dies ist in vielen Fällen tolerierbar, da der mit voller Drehzahl laufende Antriebsmotor genügend Leistung abgibt.

Gemäß einer alternativen Ausgestaltung der Erfindung kann die Kupplung als hydraulischer Drehmoment-Wandler ausgebildet sein, um auf diese Weise genügend Drehmoment bei gleichzeitig kleiner Drehzahl für den Landantrieb bei der Wasserausfahrt bereitzustellen.

Vorzugsweise ist eine Regelschaltung vorgesehen, umfassend einen Drehzahlsensor am Landantrieb, einen Soll-Ist-Vergleicher, ein stetig regelbares Relaisventil und ein Betätigungsorgan, das die Kupplung und gegebenenfalls die Bremsen des Landantriebs moduliert. Für die Betätigung der Kupplung und gegebenenfalls der Bremsen und/oder des Retarders können grundsätzlich alle bekannten Kraftsysteme verwendet werden; da die amphibischen Fahrzeuge üblicherweise mit einer Bordhydraulik und/oder Pneumatik ausgerüstet sind, empfiehlt es sich, die Betätigungskräfte hydraulisch oder pneumatisch zu erzeugen.

Anhand der Zeichnung soll die Erfindung in Form eines Ausführungsbeispiels näher erläutert werden. Es zeigen

Fig. 1 in schematischer Darstellung einen Ausschnitt aus dem Antriebsstrang des Landantriebs und

Fig. 2 in schematischer Darstellung die zugehörige Steuer- und Regelschaltung.

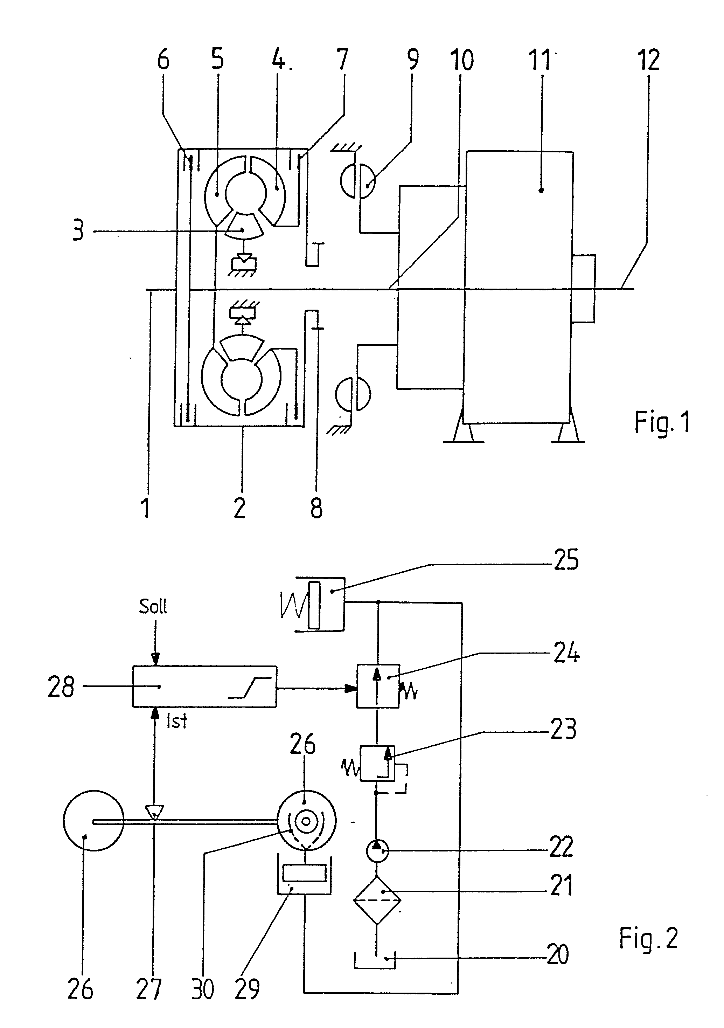

In Fig. 1 erkennt man eine von dem in der Zeichnung nicht dargestellten Antriebsmotor des amphibischen Kraftfahrzeuges kommende Antriebswelle 1, mit der ein stufenloser hydraulischer Wandler 2 gekoppelt ist. Der Wandler 2 besteht in üblicher Weise aus einem Turbinenrad 3, einem feststehenden Leitrad 4 und einem Pumpenrad 5, welches seinerseits mit der Abtriebswelle 10 des Wandlers 2 gekoppelt ist. Eine Wandlerüberbrückungskupplung 6 verbindet Antriebswelle 1 und Abtriebswelle 10 bei hohen Drehzahlen direkt.

Mit dem Wandler 2 ist ein Antriebsrad 8 für einen Nebenabtrieb verbunden.

Dem Wandler 2 vorgeschaltet ist eine besondere Kupplung 7, mit deren Hilfe es möglich ist, die Differenzdrehzahl zwischen Antriebswelle 1 und Abtriebswelle 10 unabhängig, jedoch geregelt zu modulieren. Bei dieser Kupplung 7 handelt es sich im einfachsten Fall um eine Reibungskupplung. Es ist jedoch auch möglich, an dieser Stelle einen Drehmoment-Wandler, beispielsweise wieder einen hydraulisch arbeitenden Wandler, entsprechend dem Wandler 2 einzusetzen. Die Kupplung 7 ist in allen Betriebszuständen überbrückt mit Ausnahme des Betriebszustandes Anlanden und Wasserausfahrt. Hier wird sie, wie schon erwähnt, dazu benutzt, die Drehzahl der Abtriebswelle 10 und damit die Drehzahl der Räder des Landantriebs 26 soweit zu reduzieren, daß sich diese nicht in das Erdreich am Ufer eingraben, sondern optimal greifen.

Der Abtriebswelle 10 des Wandlers 2 ist ein herkömmliches Schaltgetriebe 11 oder ein Automatikgetriebe mit Ausgangswelle 12 zugeordnet, mit dem auch ein Retarder 9 als verschleißfreie Dauerbremse verbunden sein kann.

Fig. 2 zeigt eine einfache Regelschaltung zur Ansteuerung der Kupplung 7. Man erkennt den Landantrieb 26, symbolisch dargestellt durch zwei Räder und die sie verbindende Achse. Die Drehzahl des Landantriebs 26 wird von einem Drehzahlsensor 27 erfaßt und als Istwert auf einen Soll-Ist-Vergleicher 28 gegeben. Dieser gibt ein der Differenz zwischen Sollwert und Istwert entsprechendes Ansteuersignal an ein stetig regelbares Relaisventil 24 ab. Dieses Relaisventil 24 steuert den Druck der hydraulischen Flüssigkeit, die von einer Hydraulikpumpe 22 aus einem Hydrauliksumpf 20 über einen Hydraulikfilter 21 angesaugt und über ein Druckbegrenzungsventil 23 auf einen Betätigungszylinder 25 geleitet wird. Der Betätigungszylinder 25 betätigt dann die Kupplung 7.

Parallel zum Betätigungszylinder 25 für die Kupplung 7 wird ein weiterer Betätigungszylinder 29 angesteuert. Dieser ist wiederum mit den Bremsen 30 des Landantriebs 26 gekoppelt. Auf diese Weise werden die Räder des Landantriebs 26 um so stärker abgebremst, je weiter die Kupplung 7 ausgerückt wird, d. h. je größer die Drehzahldifferenz zwischen Sollwert und Istwert ist. Diese Differenz ist bekanntlich besonders groß, so lange das Fahrzeug noch im Wasser schwimmt, da die Bremswirkung des Wassers auf die Räder minimal ist.

Es versteht sich, daß eine ungeregelte Abbremsung über die Betriebsbremse oder eine Abbremsung über den Retarder 9 möglich ist.

Dank dieser Maßnahmen kann der Antriebsmotor des amphibischen Kraftfahrzeuges auch beim Anlanden mit voller Drehzahl gefahren werden, so daß der Wasserantrieb - Schraube oder Jet - den maximalen Schub zur Unterstützung des Anlandens und der Wasserausfahrt abgibt.

## Ansprüche

1. Amphibisches Kraftfahrzeug mit einem Motor, der einen Wasserantrieb direkt und einen Landantrieb über ein Getriebe antreibt, dadurch gekennzeichnet, daß in den Antriebsstrang - Antriebswelle (1), Abtriebswelle (10), Ausgangswelle (12) - des Landantriebs (26) eine Kupplung (7) eingesetzt ist, deren Kupplungskraft während des Anlandens und der Wasserausfahrt entsprechend der Differenz zwischen Ist- und Solldrehzahl des Landantriebs (26) derart veränderbar ist, daß die Abtriebsdrehzahl bis auf die Solldrehzahl geregelt reduzierbar ist.

2. Amphibisches Kraftfahrzeug nach Anspruch 1, dadurch gekennzeichnet, daß mit der Ansteuerung (Betätigungszylinder 25) der Kupplung (7) eine Ansteuerung (Betätigungszylinder 29) der Bremsen (30) und/oder des Retarders (9) des Landantriebs (26) gekoppelt ist.

3. Amphibisches Kraftfahrzeug nach Anspruch 1 oder 2, dadurch gekennzeichnet, daß die Kupplung (7) eine Reibungskupplung ist.

4. Amphibisches Kraftfahrzeug nach Anspruch 1 oder 2, dadurch gekennzeichnet, daß die Kupplung (7) ein hydraulischer Drehmoment-Wandler ist.

5. Amphibisches Kraftfahrzeug nach einem der Ansprüche 1 bis 4, dadurch gekennzeichnet, daß eine Regelschaltung vorgesehen ist, umfassend einen Drehzahlsensor (27) am Landantrieb (26), einen Soll-Ist-Vergleicher (28), ein stetig regelbares Relais-Ventil (24) und ein Betätigungsorgan (Betätigungszylinder 25), das die Kupplung (7) und gegebenenfalls die Bremsen (30) des Landantriebs (26) moduliert.

Fig. 1

Fig. 2